# EUROPEAN PATENT APPLICATION

(11) **EP 1 769 908 A1**
(43) Date of publication of application: **04.04.2007**
(21) Application number: 06013028.3
(22) Date of filing: 23.06.2006
(51) Int. Cl.: B32B 27/32, B32B 27/08, B29C 47/06, C08L 23/08, C08L 23/12, B65D 77/12, B65D 65/40

(54) **Flexible packaging systems and process for their manufacture**

(30) Priority: 29.09.2005 IT MI20051823
(71) Applicant: SAFTA S.P.A., 29100 Piacenza (IT)
(72) Inventor: Caldiroli, Ernesto, 29100 Piacenza (IT); Navarini, Franco, 29100 Piacenza (IT); Tagliaferri, Giorgio, 29100 Piacenza (IT)
(74) Representative: Incollingo, Italo

(57) **Abstract**

The present invention concerns an easy tear flexible packaging system based on the combination of several film layers, where one or more layers is fabricated using special resin blends and/or particular extrusion/stretching conditions in order to obtain that said special layer(s) facilitate the tearing of the whole complex and guides the tearing behaviour of the other layers, when said complex is converted into a consumer package.

## Description

The present invention relates to flexible packaging systems such as films, sheets, foils and the like, generally consisting of several layers of thermoplastic synthetic resins, and to the formed articles thereof such as packages, wrappers, containers, bags and the like, which are characterized by the fact that they can be easily opened by hand by the end user, in particular by simply tearing them, and are specifically destined to contain solid, liquid, gelatinous products that require a protection of their characteristics and, preferably, a barrier to environmental outer agents.

Basically the invention concerns systems like multilayer films comprising a master subsystem (primary layer) which generates not only its own tear opening but, in addition, guides also the opening of the other whatever associated components.

Part of this invention are also advantageous processes for the manufacture of said films, sheets, foils and the like and of the relevant packages.

### Prior Art

It is of wide experience that major difficulties are faced when trying to open a package without making use of scissors, knives or other similar devices either because the package forming film is too tough and requires a quite high strain to complete the opening, even when a notch is cut on the side of the package in order make it easy to initiate the tearing, or because, even when the operation seems apparently simple, the two films forming the opposite faces of a pouch tear nearly spontaneously along directions different from the one sought , with the actual risk that part of the content pours off in an uncontrolled manner sometimes even smearing the person who is handling the package.

The problem is particularly felt with some particular types of packages as those shown in fig: 1a (flat pouch) or those shown in fig. 1b (stand-up pouch) especially when the content is a liquid or a paste or it consists of mixtures of solid and wet products such as soups, pickles, pet food etc.

In order to eliminate such an inconvenience, several systems have been proposed, among which the most known and used consists of a controlled weakening of one of the layer components of the multilayer structure, by a rectilinear micro-incision of either spots or hatches produced by laser ray or mechanical devices (see EP's n°363540 and n° 468619). This solution is rather effective; it, however, shows some drawbacks such the need of complex equipment and production processes, difficulties to perfectly align the treated areas with the pre-cut notch and to match the treated areas of the front and the back side of the pouch, risks excessive weakening of the package.

It has also been proposed to solve this problem by using longitudinally tearable polyolefin based films, consisting of: a) - from 99 to 90% of crystalline polypropylene resin and from 1 to 10% of crystalline polyethylene (JP Patent Application H10-65193); or b) - polyolefin resins and sorbitol derivates (JP Patent Application H01-299813); c) - resins formed of polypropylene and styrene polymers (JP Patent Application S64-56740).

Further among the Prior Art Patent documents concerning easy-open bag, the following are to be mentioned: - EP n° 112954 (laminates of L-LDPE- and bi-axially drawn Ny6); - WO2004/113193 (preferential tearing line and notch); - WO2005/113370 (stand-up pouch body formed of a laminate comprising a mono-directionally orientated film); - EP n° 0971980 (LLDPE blends with cyclic-olefin copolymers (COC) to improve toughness and processability); - EP n° 1388415 (laminate with a polyolefin core layer sandwiched between COC containing films); - WO 2004/063273 (films of a COC and PE). Notwithstanding some advantages, these conventional systems seem not to have radically solved the tear opening problem and have shown major limitations that have negatively affected their market expansion.

### Summary of the Invention

First object of the present invention is to provide multilayer structure systems wherein the layer that is normally the more tear resistant one has not only been rendered easy-tearable but is also such to be able to guide the tearing behaviour of the layers that are associated to it in the multi-layer construction.

Another object of this invention is a process allowing to obtain optimal values of all the characteristics of the final packaging materials, as relates not only to tearing but also to mechanical resistance, transparency, etc. by critically coordinating resin blend compositions and mechanical treatments of the same.

The main features of the invention are reported in the claims here at the foot that have to be considered also herein incorporated.

Synthetically, the invention opens a new way for the manufacturing of tearable articles in the sense that by "modulating" now the two functions resins compositions and dimensional treatment of the same, the limits of traditional resin compositions are eliminated, and the range of resin types that can be used for this purpose is broadened by adopting, in certain cases, dimensional modification treatments preferably consisting in the use of stretching systems selected from the group of high stretching during the extrusion- or the post-extrusion-phase, and, in other cases, by adopting soft stretching systems in combination with special resin blends which allow to obtain extruded or, preferably, co-extruded films that result to be easy-tearable, both lengthwise and crosswise.

According to the present invention, the radical solution of the package manual opening problem has been identified in the development of a complex structure, consisting of various films that are laminated one to the other by existing technologies, wherein, however, at least one of said films, preferably the inner primary sealing layer, has such characteristics to facilitate and guide the tearing of the whole package , i.e. by dragging also the other films in the desired direction and in a perfectly linear way; said inner film subsystem becomes the tearing promoter as it has been prepared by inter-coordinating said two critical factors: i) - blend composition; and ii) -dimensional modification treatment.

An advantage of this system in that the opening operation can be initiated from any point of the package lateral edges (obviously starting from the opening notch) and requires only a minimum effort of the fingers by the end user to accompany the guided tearing of the material. Said primary film must show also all the characteristics of the mechanical and chemical resistance (often required by these applications) and in several cases must also withstand the steam sterilization treatment (required for the shelf-life of certain food products) without alterations of the package behaviour.

The mostly used complex structures for these applications consist of at least two films, more often three, four and even more films. The outer layer of these films is generally a thermostable film (such as PET, OPA, Aluminium foil, EVOH, OPP etc.) suited to be printed with several colours, whereas the inner layer has thermoplastic properties that render it thermosealable and can be mono-extruded (utilizing base resins of the type LDPE, LLDPE, HDPE, PP homopolymers, PP copolymers, COC polymers etc. and their blends) or co-extruded (through combinations of polymers such as PE/PP, PE/PA/PE, PP/EVOH/PE, PPIPA/PP, PP/EVOH/PP, PE/EVOH/PP,

PP homopolymers/PP-copolymers, LLDPE/LMDPE and mixtures thereof with COC polymers etc.).

One (or more) intermediate layer(s) is often present therein acting either as a barrier to environmental outer agents (H2O, O2, CO2, etc.) and to inner substances contained in the product (aromas, fragrances, flavours) or as high mechanical resistance film..

The system according to the invention based on the critical coordination of the two parameters: 1) - blend composition, and 2) - dimensional treatment, allows the obtainment of several film types. Synthetically four main classes of "tear foil"®, indicated as R, S, T, T' are provided which, once incorporated in a complex structure, can produce satisfactory and, in several cases, even surprising results to reach the main scope of the present invention.

The type R film is prepared by extruding or co-extruding polyolefin based thermoplastic resins preferably of the type HDPE, isotactic PP, block copolymer or random copolymer PP etc. with such a molecular structure to maintain an orientated state in the melt die exiting direction once some fundamental process parameters are complied with. It has indeed been found that very good results can be obtained when at least the following critical parameters are selected: - a particular value of the die gap; - a proper blow-up ratio (BUR); - a properly defined height of the so called "frozen line" (bubble zone in which the molten resin turns solid) and, above all, when those resins are selected which, either singularly or, better, in special blends, can undergo stretching processes and maintain permanent structural modifications, i.e. crystallize in a high orientation state.

It has advantageously been found that these films, once they are bound to other films by means of particular adhesives, allow the whole structure to behave in an excellent manner as to manual tear, either because the force required is very low and because the tear direction results sufficiently linear. Therefore the first combination R relates to polyolefin mixtures submitted to a notable stretching during the extrusion phase.

The type S film includes the films which are submitted to said notable stretching in a separate phase, subsequent to the extrusion phase, that imparts to the polymer macromolecules an orientation in the longitudinal direction in way that is substantially similar to type R, but through a more efficient dimensional treatment.

Also for class S the selection of the primary film resin components is important as the essential condition whereby the post-extrusion stretching action results in a crystallization of the polymeric chains in a preferential direction and thus in a condition such to make the film easy tearable along said direction.

Conceptually these resin types have to consist of polymers with a linear structure and with a configuration as isotactic as possible to reach a sufficient crystallinity. The lamination of these easy-tear films with other multifunctional films, by means of high-performance polyurethane adhesives, makes the foil complex suited to prepare easily manually openable packages. moreover, with this system it is possible to obtain a value of divergence of the tearing front and back sides of the pouch much lower than the value of the previously described system and of the order D/L=0.3 or even smaller (see Table I).

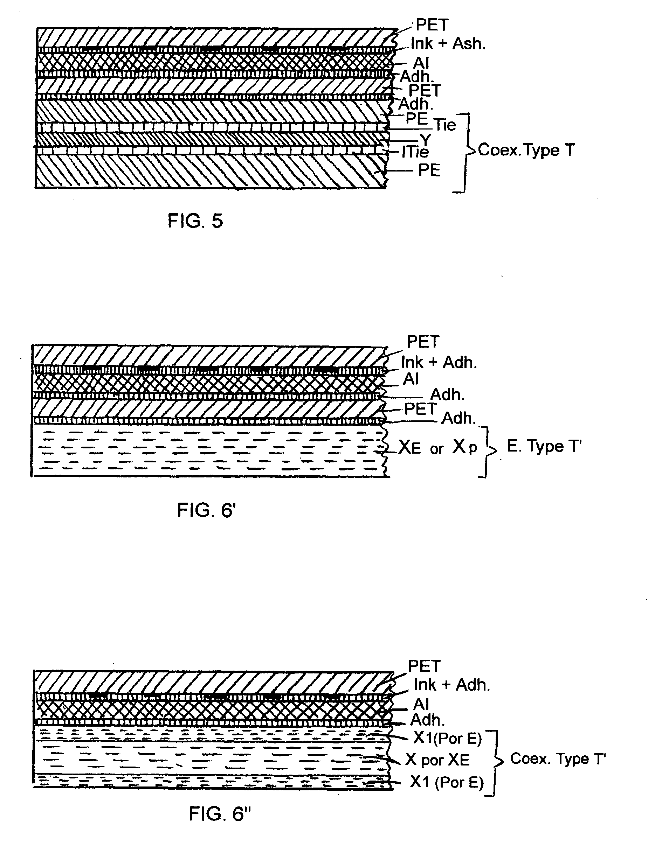

The third type of film is the most important one. This can be in either version T or version T', both not requiring a notable stretching process, but only an extremely soft pseudo-stretching and is essentially based on the specific resins used, on the ways they are blended and, in some cases, on the way they are distributed or positioned within the structure complex (layer sequence) as shown in figures 5, 6' and 6". Said films T and T' impart to said final structures easy tear characteristics not only lengthwise, but, surprisingly, also in the transversal direction.

This system is particularly advantageous for the packaging of cosmetics flat sachets where, depending on the type of packaging machine used to fabricate them, the tear preferential direction can result either longitudinal or transversal. In these applications a very high mechanical resistance (in particular to compression) is required, which normally, is scarcely compatible with easy tearing characteristics.

The invention will now be described with reference to the attached drawings:
- Figures 1a, 1b, 2 and 3 are prospective views;
- Figure 4 is a front view of a torn bag;
- Figure 5 is a cross-section view of the T type film; and
- Figure 6' and 6" show a cross-section of a complex derived from the T' type film in the extruded and coextruded version.

Table I shows how the tearing values improve over the standard reference, in a lower or bigger measure, when process variations or, more frequently, composition variations of the sealing film base components are introduced. Indeed Table I indicates the main properties of packages rendered "tearable" through the use of R, S, T and T' films. The compositions thereof are given (as examples) in figures 5, 6 and 6'.

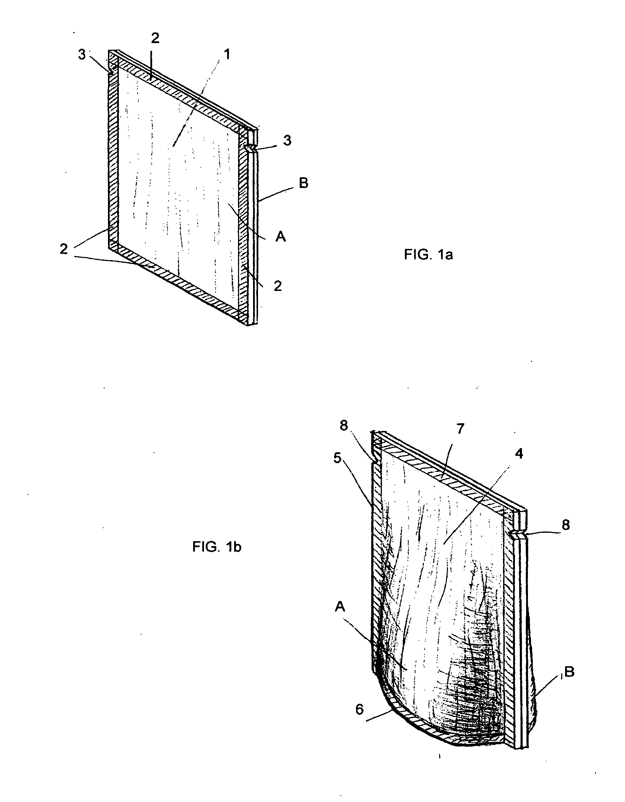

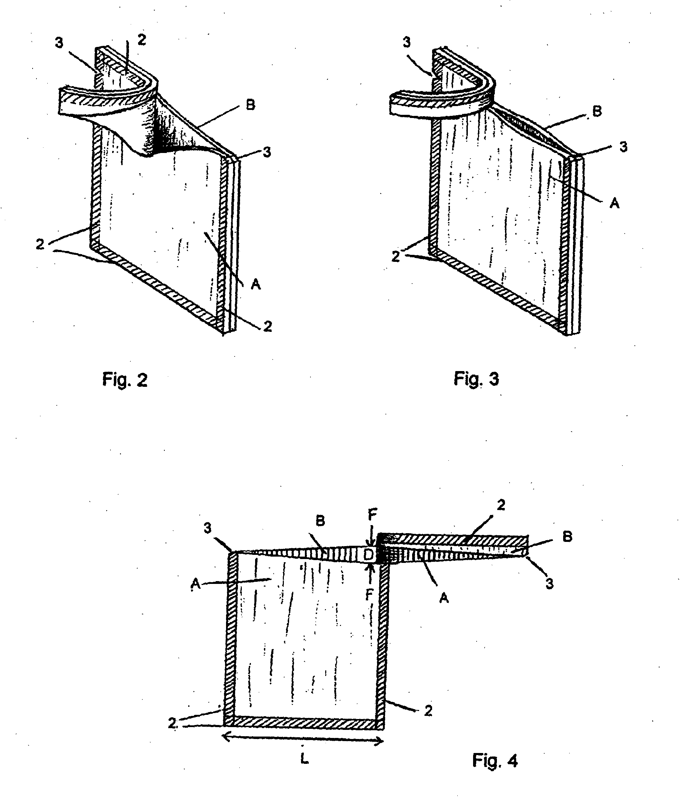

Figure 1a refers to a flat pouch 1 (FP) consisting of a front A and of a back B, sealed one to the other along their perimeter as per line 2 and provided with a tear notch 3. The pouch type of Figure 1b shows a stand-up pouch 4 (SU) with tear notch 8, consisting of front A and back B sealed one to the other along two sides as per line 5 and on the top as per line 7, and of a bottom sealed to the pouch faces by a shaped seal 6. Figure 2 shows how a FP type pouch (however the same behaviour can occur on the pouches SU) can lacerate when the tearing, even if relatively easy, does not follow a precise rectilinear line but propagates, without control, in a diagonal direction on a pouch face, with the consequent undesired pouring off of the content. If this divergence from an ideal rectilinear line is higher than a given value, the pouch is considered unsuitable.

On the contrary figure 3 shows how the same flat pouch FP opens perfectly when the tearing line LS remains perfectly parallel to two sides and perpendicular to the two other sides of the pouch. The same concept applies to the type SU pouch.

Figure 4 shows how to calculate the divergence value D/L of a practical tear line vs. the ideal line indicating the acceptability limits whereby an easy-open pouch can be considered safe from the view point of the content incontrollated pouring. The same figure shows an open pouch in which the two arrows F indicate the divergence distance D whose ratio to the length L indicates the acceptability value to which a maximum limit D/L=0.1 has been given, although obviously the lower this ratio the better the result when opening the pouch. The two faces A and B are here represented to clarify the situation after completing the tearing due to said divergence from the perfectly rectilinear ideal line vs. the real oblique line.

Figure 5 shows the cross-section of a complex sheet made up of several layers including the coextruded T type film according to the invention, wherein the dimensional modification is obtained by thinning the melt thickness as it passes through the die gap.

Figures 6' and 6" show the cross-section of a possible combination of various layers wherein the ones according to the invention are the type T' extruded o coextruded films, the easy tearing of which is obtained thanks to the specific resin mixture composition or from the disposition of the various mixtures in a coextruded film.

Table I summarizes the more representative data relevant to the R, S,T, T' films, measured after lamination of the same with other films in order to obtain structures suitable to the packaging of FP or SU pouches. Said data relate to the properties that are fundamental to judge the suitability of the various film types for the most important applications. The tearability is expressed both in grams and in joules to better estimate the behaviour to the tearing force.

### Detailed description of the more important applications of films R, S, T, T'.

A first embodiment is based on the concept that when two or more films are laminated by using high performance polyurethane adhesives and when also the sealing film (here of the R type) has undergone a stretching or orientation process during the extrusion step, the final complex structure shows easy-tearing characteristics preferably in the longitudinal direction.

A typical example of use of primary film is the following three layer laminate structure (the characteristics of which are indicated in the first column of Table I) consisting of:
a) An outer film consisting of PET 12 micron thick, reverse printed with up to 9 colours with special vinyl base inks and laminated, with adhesives (Adh) capable of developing a high adhesion strength in the presence of said printing inks, to:
b) A gas barrier central film comprising a metal sheet (f.i. of aluminium Al 9 µ) laminated on its turn, with adhesives (Adh), for instance of polyurethane type but also of the other types used to fabricate flexible laminate packaging materials, capable to impart maximum mechanical, thermal and chemical resistance to the complex, to:
c) A film (here of 75µ thickness) positioned as the inner layer of the final structure having the function of sealing layer, based on polyolefin resin which, in this specific case, include as the main component homo-or block copolymer polypropylene, fabricatedd on an extrusion equipment preferably of the tubular (or hot-blown) type, suitably adapted to impart to the film special characteristics as to obtain easy tearing features of the whole complex.

In details the essential conditions for a hot-blown equipment to allow that a given resin, during the solidification phase, undergoes an orientation process in a machine specific zone are:
- Die gap width from 1 to 4 mm (preferably 1,5-3 mm);
- Blow-up ratio (BUR) in the range from 1:1 to 1:2;
- Frost line height from 0.5 to 2,5 mm;
- Polyolefin resin type (preferably based on PP) which can achieve the maximum degree of crystallinity and thus of orientation in the process conditions; said resins, either alone or in specific blends) are generally composed of polymers with linear structure and high crystallinity.

The second embodiment of the invention, substantially similar to the above process as far as selection of the resins, the lamination conditions, the evaluation criteria, the results acheived etc. are concerned, shows the variant that the orientation phase of the polyolefin film (S type) is carried out in a step successive to the extrusion step (in or off line) by means of a longitudinal stretching group which provides the primary film heating and its contemporaneous orientation through a progressive orientation to achieve notable stretching ratios up to from 2 to 7 times the initial unitary value, including the stabilisation final phase.

This variant, even if involves high investment costs and a material wastage bigger than the previous process, can achieve better quality results from the standpoint both of easy tearing and of the low values of the deviation D/L (as reported in Table I), once the proper conditions of primary film stretching and extrusion (both by flat die and hot-blown) have been established.

A further very important embodiment of the invention, which is substantially independent from the specific technical solutions described for the previous versions of the extrusion process (f.i. notable stretching during-or post-extrusion) is based on the surprising discovery that the limited orientation degree that occur just as a consequence of the thinning effect by pseudo-stretching (analogically referable to the effect of a classic low stretching process) of the melt during its cooling (again both by flat die and hot-blown) is sufficient to achieve good easy tearing characteristics; here the type of resins forming the extruded or co-extruded structure, the blend type, and possibly the order in which said resins or mixtures thereof are positioned across the film thickness are of fundamental relevance (some examples of complete structures are shown in the figures 5, 6' and 6").

It has indeed been found that when the central layer of a coextruded three (preferably five) layer film is constituted of resins of the type EVOH (at various ethylene contents), PVA, PA etc. (indicated with Y in fig. 5) even at very low thickness (down to a minimum of 3µ) obtained by pseudo stretching, and when the adhesion of said resins to the resins of the other layers (currently polyolefins) is particularly high (thanks to the use of suitable tie layers), the resulting film tears easily especially in the transversal direction but also in the longitudinal direction and behaves in the same manner even after lamination (with the use of special polyurethane adhesives) to other films and facilitates the tearing of the whole three or more layer complexes.

In figure 5 the cross-section of a type of structure useful for some of these applications is represented where the main film (indicated with "coex type T") forms the complex coextruded portion i.e. the component that is fundamental to impart to the finished package the characteristics of easy-tear and high chemical, mechanical, thermal resistance.

Even more surprisingly, it has been found that by extruding or coextruding particular blends of commonly used resins (such as LDPE, LLDPE, MDPE, HDPE, homo or copolymers PP) and of recently available resins of the type of copolymers based on of cyclic olefins (type norbornene) and ethylene, films which are easy to tear both length-and cross-wise, with respect to the extrusion direction, are obtained.

Said resins, based on cyclic-olefin copolymers (COC), are relatively recent and, in the world, are presently manufactured in rather small amounts by few companies, including Daicel (ex Hoechst-Celanese), Mitsui, Zeon Chem. Co., by a metallocene catalyst based technology.

These new grades of copolymers impart to the film made thereof very high optical, thermal and gas barrier characteristics; their nature is prevailingly amorphous and are suited to be blended with the traditional polyolefin grades modifying or improving some important properties of the latter.

The films fabricated with the COC resins and their blends have been the matter of study of some prestigious Universities, with a special focus to identify their molecular structure and find the reason of some specific behaviours.

A few patents have already been filed covering some interesting characteristics of the films fabricatedd with blends of COC with traditional polyolefin resins.

Even our company, Safta S.p.A., since 2001 has been carrying out experimental work with these resins and the relevant films fabricated with the same, highlighting some important characteristics, such as stiffness, gas barrier and easy tearing.

The present invention is based on certain innovative features that have been identified during the previous study, but especially on a long experimental work carried out more recently from which it has been found that, under specific conditions, a film can be developed, either mono- or multi-layer, preferably by the hot-blown extrusion technology, but also by the flat die extrusion technology, having balanced, i.e. the same in the longitudinal and in the transversal direction, characteristics in terms of easy tearing.

Said characteristic can be achieved when the blend composition is constituted by from 35% to 95% of polyethylene based resins, having densities from 0,910 g/cm3 to 0,960 g/cm3, and by from 5% to 65% of polycyclic olefin resins.

Said film will be identified as extruded type T' having composition of series X...

According to a surprising feature of the invention, films of blends of a minimum content of 40% PP ( polypropylene) and a maximum content of 60% COC, have shown very low tear values lengthwise but higher values crosswise. This feature is extremely favourable when said films are used as thermosealing components in a laminated material destined to manufacture stand-up pouches considering that in these applications the tear direction is generally lengthwise.

This film will be identified as type T' with composition series Xp.

A further advantage is represented by the possibility of reducing the total thickness, by virtue of the increased stiffness and gas barrier characteristics, deriving from the presence of the COC copolymer (even in minor amounts) blended with traditional grade polyolefins.

Further formulation variations can be implemented, with referring to multilayer coextruded films, with multiple advantages for various aspects: it is possible, in fact, to increase the COC content even up to 65% when such a blend is utilized only in the central layer (either of the type XE or Xp) of a film made of three or more layers, whereas the outer layer composition (X1E and X1 p in fig 6") can be "modulated" so to get blends consisting only of polyolefin resins (based on polyethylene or polypropylene) or of blends of polyolefin and resins COC, the latter up to a maximum content of 40% (preferably of 30%).

A further advantage of the coextruded film derives from the possibility to formulate the outer layer composition in function of the characteristics of sealability and adhesion strength necessary to achieve the high performances often required by several package types destined to very critical applications involving thermal (sterilization)-mechanical (compression)- and chemical (aggressiveness)- resistance.

One of the major uses of said complex films of the T and T' types concerns also the manufacturing of pouches or sachets destined to contain cosmetics (creams, perfumes, shampoo etc) or pharmaceuticals. These applications are very critical because these packages must be endowed with high resistance to compression and to chemical aggressiveness characteristics, but a low tear resistance is also appreciated by the consumer to facilitate their opening by means only of the fingers. Obviously the invention as described is susceptible of those changes additions, substitutions and the like which, being within reach of the average qualified technical person of this art, fall within the scope and spirit of the claims hereto follow.

**Table I**

| **Properties** | | | **Reference** | | | **Type R** | | **Type S** | | | **Type T** | | **Type T** | |
|---|---|---|---|---|---|---|---|---|---|---|---|---|---|---|
| | | | **Pouch FP** | **Pouch SU** | | **Pouch SU** | | **Pouch FP** | **Pouch SU** | | **Pouch FP** | | **Pouch FP** | **Pouch SU** |
| | | | | | | | | | | | | | | |
| **Tear propagation resistance (9)** | MD | | > 900 | > 1200 | | 100 + 150 | | 30 + 50 | 30 + 40 | | 200 + 250 | | 30 + 50 | 80 + 100 |
| | TD | | > 900 | > 1000 | | 250 + 500 | | > 1000 | > 1000 | | 150 + 200 | | 40 + 70 | 150 + 200 |
| **Tear propagation resistance (J/10cm)** | MD | | > 0.70 | > 0.80 | | 0.25 + 0.40 | | 0.06 + 0.08 | 0.05 + 0.07 | | 0.40 + 0.50 | | 0.08 + 0.08 | 0.08 + 0.12 |
| | TD | | > 0.70 | > 0.40 | | > 0.40 | | > 0.60 | > 0.60 | | 0.30 + 0.40 | | 0.07 + 0.10 | 0.10 + 0.20 |
| **Divergence D/L** | MD | | > 0.20 | > 0.20 | | 0.08 + 0.10 | | 0.02 + 0.04 | 0.02 + 0.04 | | 0.04 + 0.07 | | 0.02 + 0.04 | 0.04 + 0.06 |
| | TD | | > 0.20 | > 0.20 | | > 0.20 | | > 0.20 | > 0.20 | | 0.04 + 0.08 | | 0.03 + 0.05 | 0.08 + 0.10 |
| **Adhesion Strength (N/15mm)** | | | > 5.0 | > 5.0 | | > 6.0 | | > 5.0 | > 7.0 | | > 5.0 | | > 5.0 | > 5.0 |
| **Heat Seal Strength (N/16mm)** | | | > 50 | > 50 | | > 50 | | 40 + 50 | 30 + 40 | | > 60 | | > 50 | > 80 |

## Claims

1. Flexible, manually easy tearing packaging systems, based on one or more layer(s) of synthetic thermoplastic resins to be selected from the group of olefin, cyclic olefin, vinyl, amidic, terephtalic homopolymers and copolymers, either extruded or co-extruded by hot-blown, flat die or other suitable technologies, anyhow treated, printed, laminated, etc, including or not including a metal layer, **characterized by** one or more layers, of particular composition and processes, that have been obtained from resins that crystallize in a state of marked dimensional orientation.

2. Systems according to claim 1, including one or more primary film(s) (sheet, foil and other similar), preferably constituted by more than one layer, at least one of which has undergone a modification of the original thickness, i.e. thinning of the extruded or coextruded melt by stretching or pseudo stretching, under crystallization conditions with consequent high degree of directional orientation.

3. Systems according to claim 2, in particular multilayer primary films that have undergone a notable stretching process during the extrusion or coextrusion of resins having a molecular structure capable of maintaining permanent structural modifications, in particular of resins of the polyolefin chemical family, preferably of the high density polyethylene (HDPE) grade, isotactic homopolymers polypropylene (PP), block polypropylene copolymers, the notable stretching ratio being from 2:1 to 12:1.

4. Systems according to claim 2, in particular films with at least a primary layer, that have undergone a notable stretching process subsequent to the extrusion or coextrusion of polymers having a linear structure and an isotactic configuration, under conditions where an orientation in the longitudinal direction has been induced.

5. Systems according to claim 1, including in particular a coextruded multilayer film the thickness of which has been reduced by a pseudo stretching process of the melt passing through narrow extrusion or coextrusion dies of resins type ethylene-vinyl-alcohol (EVOH), poly-vinyl-alcohol (PVA), poly-amide (PA), cyclic olefin copolymers (COC) and blends of the same having longitudinal and transversal tearability.

6. Systems according to claim 1, including at least a thermostable, printable, high mechanically resistant outer layer, and an inner primary layer acting also as thermosealable film, **characterized by** a high macromolecular orientation, and/or some special resin blends, besides being the promoter of tearing dragging also the other layers laminated to it.

7. Systems according to claim 6, where said thermostable outer layer is a film based on PET, OPA. Aluminium foil, EVOH, OPP and other similar materials.

8. Systems according to claim 6, where the inner thermosealable layer is selected within the group consisting of: - a mono-extruded structure of LDPE, LLDPE, HDPE, homopolymers and copolymer polypropylene and blends of the same; and - a co-extruded structure of combinations type PE/PP, PE/PA/PE, PE/EVOH/PE, PP/PA/PP, PP/EVOH/PP, PE/EVOH/PP, homopolymer PP, random copolymer PP, block copolymer PP, PE/COC, PP/COC, PE/COC + polyolefin blends, PP/COC + polyolefin blends and other anyway including the resins here mentioned.

9. Systems according to at least one of the previous claims, including also an intermediate layer having function of providing a barrier to environmental outer agents and/or to emissions of substances contained in the packed product or in the atmosphere that creates inside the package from said inside package atmosphere towards the outer environment.

10. Production process for the manufacturing of flexible packaging systems destined to food, cosmetic, pharmaceutical and other similar applications, endowed with characteristics of high tearability, achieved by extrusion or co-extrusion of thermoplastic resins, in particular according to claims from 1 to 9, **characterized by** the fact that: - blends are prepared utilizing thermoplastic resins selected among the ones capable of achieving and maintaining an orientated state; - said blends are extruded or co-extruded forcing the melt to pass through selected extrusion dies and the generated extruded or co-extruded forms are submitted to dimensional modification treatments, critically co-ordinated with the composition of said blends and with the extrusion or co-extrusion conditions, said co-ordinated treatments generating the thinning of the final film by virtue of a notable stretching or pseudo stretching through the properly designed die gap width, this way by co-ordinating in a flexible manner the following two parameters i) blend composition, ii) dimensional modification treatment, the range of useful resin grades is broadened and the characteristics of tearability and mechanical, thermal, chemical resistance can be optimized.

11. Production process according to claim 10, in particular focused to the preparation of primary film according to claim 3, where blends of polyolefin resin grades are prepared and, based on the composition of the selected resin grades, the parameters of the extrusion or co-extrusion process are optimized with particular relevance to die gap width, blow-up ratio (B.U.R.), frost line height.

12. Production process according to claim 11, where the die gap width ranges from 1.0 to 4.0 mm, preferably from 1.5 mm to 3.0 mm, the blow-up ratio (B.U.R.) ranges from 1:1 to 1:2 and the frost line height ranges from 0.5 m to 2.5 m.

13. Production process according to claim 10, in particular focused to the preparation of primary film submitted to a notable stretching as a separate phase subsequent to the extrusion or co-extrusion phase, according to claim 4, where compositions are prepared consisting of blends of resin grades having linear structure and the higher isotactic configuration possible, said blends are extruded or co-extruded under optimized process conditions as a function of the specific resin grades selected, and the relevant fabricated films are submitted to an off-line notable stretching phase this way generating a macromolecular orientation in the longitudinal direction , said notable stretching ranging from 2:1 to 7:1.

14. Production process according to claim 13, where said primary films are bound to traditional commercially available multifunctional films by means of high performance polyurethane adhesives, this manner generating laminate materials particularly suited to fabricate packages the various sides of which are endowed with very high and very directional tearability, showing divergence values D/L ranging from 0.02 to 0.1.

15. Production process according to claim 10, where co-extruded structures are fabricated combining of one or more traditional commercially available resin(s) and resin grades or blends of resin grades of different chemical families, such as EVOH, PVA, PA, COC, said film having been thinned (pseudo stretching) in such a way that the functional layer can reach also low thickness values by forcing the melt to pass through extrusion or co-extrusion dies having a proper gap, and a very high layer bond strength is achieved by using proper tie layer resin grades, so that interferences are generated among the used resins in a manner so to achieve an easy tearability of the finished complex.
